# EUROPEAN PATENT APPLICATION

(11) **EP 3 525 216 A1**
(43) Date of publication of application: **14.08.2019**
(21) Application number: 19151812.5
(22) Date of filing: 15.01.2019
(51) Int. Cl.: H01B 13/00, F02C 7/00, H01B 13/012

(54) **METHOD FOR MANUFACTURING A CABLE HARNESS**

(30) Priority: 12.02.2018 GB 201802228
(71) Applicant: Rolls-Royce plc, London SW1E 6AT (GB)
(72) Inventor: Salt, Stephen, Derby, Derbyshire DE24 8BJ (GB); Broughton, Paul, Derby, Derbyshire DE24 8BJ (GB); Cullinan, Jack, Derby, Derbyshire DE24 8BJ (GB); Green, Christopher, Derby, Derbyshire DE24 8BJ (GB)
(74) Representative: Rolls-Royce plc

(57) **Abstract**

A method of manufacturing a cable harness may comprise the steps of providing a plurality of cables, wherein each cable comprises a cable inner and a coating, wherein each cable inner comprises at least one conductor, locating at least a portion of each of the plurality of cables within a mould tool, heating the portions of each of the plurality of cables such that the coating of each cable consolidates to form a common harness with a solid cross section, wherein the cable inners are arranged within the common harness.

## Description

The present disclosure concerns a method of manufacturing a cable harness, a method of sintering a cable harness, a method of manufacturing a gas turbine engine and a cable harness for a gas turbine engine.

A plurality of wires or cables are often required to be passed around components and/or structures. Where multiple wires are collocated, they can entangle and/or experience mechanical degradation over the operational life of the component and/or structure. For example the wires may rub against each other due to operation, vibration and/or other thermo-mechanical effects. This can increase maintenance burden and degrade the wires and/or the signals passing through the wires. Conventionally sleeves, brackets and braiding of the wires may be used to organise a plurality of wires to prevent entanglement and rubbing during operational life. The arrangement of conventional sleeves, brackets and braiding around the wires to prevent entanglement and rubbing is commonly referred to as a harness for the wires.

A gas turbine engine has a substantial number of electrical conductors for transmitting electrical power and signals to and from the individual electrical components. Conventionally, such conductors may be in the form of wires and/or cables which are assembled together in a harness. In such a conventional harness, each wire may be surrounded by an insulating sleeve, which may be braided or have a braided cover. The connections between the individual components and the conventional harness are made, for example, by multi-pin plug and socket connectors. Similarly, communication between the harness and power, control and signalling circuitry is achieved through a multi-pin connector.

The electrical conductors of the typical gas turbine engine serve a substantial number of electrical components which in turn serve, for example, to sense operating parameters of the engine and/or to control actuators which operate devices and/or components in the engine. Such devices may, for example, control fuel flow, variable vanes and air bleed valves. The actuators may themselves be electrically powered, although some may be pneumatically or hydraulically powered, but controlled by electrical signals.

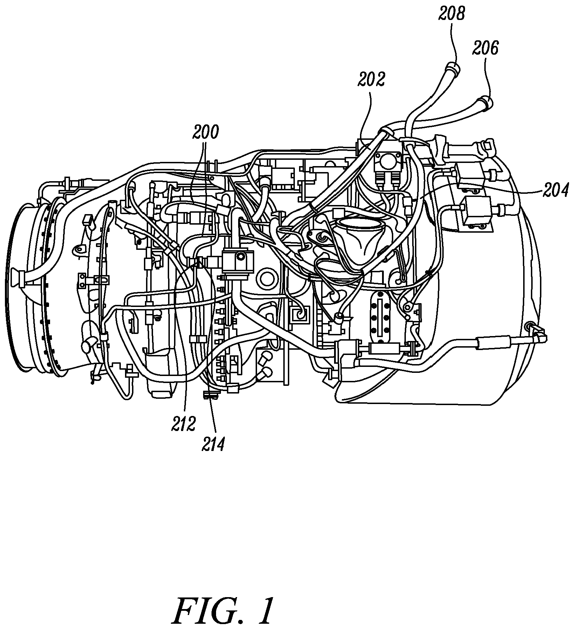

By way of example, Figure 1 of the accompanying drawings shows a typical gas turbine engine 200 including two conventional wiring harnesses 202, 204, each provided with a respective connector component 206, 208 for connection to circuitry, which may be for example accommodated within the airframe of an aircraft in which the engine is installed.

The harnesses 202, 204 are assembled from individual wires and cables which are held together over at least part of their lengths by suitable sleeving and/or braiding. Individual wires and cables, for example those indicated at 210, emerge from the sleeving or braiding to terminate at plug or socket connector components 212 for cooperation with complementary socket or plug connector components 214 on, or connected to, the respective electrical components.

Each conventional harness 202, 204 therefore comprises a large number of components, including various individual wires and/or bundles of wires, supporting components (such as brackets or cables) and electrical and/or mechanical connectors. The large number of components makes the conventional harness difficult to manipulate for assembly and maintenance. Further the large number of components can make the assembly process complicated (and thus susceptible to errors) and/or time consuming.

Disassembly of the conventional harnesses (for example removal of the conventional harnesses from a gas turbine engine during maintenance) may also be complicated and/or time consuming. Thus, in many maintenance (or repair or overhaul) procedures on a gas turbine engine, removal and subsequent refitting of the conventional electrical harness may account for a very significant portion of the operation time and/or account for a significant proportion of the potential assembly errors.

The electrical conductors in a conventional harnesses may be susceptible to mechanical damage. For example, mechanical damage may occur during installation (for example through accidental piercing of the protective sleeves/braiding) and/or during service (for example due to vibration). For a conventional harness on a gas turbine engine the operational conditions can be severe including a high altitude environment and thermo-mechanical effects transmitted through the engine structure. In order to reduce the likelihood of damage to the conductors in a conventional harness, the protective sleeves/braiding may need to be further reinforced, adding further weight and reducing the ease with which they can be manipulated.

It is therefore desirable to improve the assembly, maintenance, operational integrity and weight of a harness for a plurality of wires and/or cables, for example for a gas turbine engine.

According to an aspect there is provided a method of manufacturing a cable harness, the method comprising the steps of providing a plurality of cables, wherein each cable comprises a cable inner and a coating, and wherein each cable inner comprises at least one conductor, locating at least a portion of each of the plurality of cables within a mould tool, heating the portions of each of the plurality of cables such that the coating of each cable consolidates to form a common harness with a solid cross section, wherein the cable inners are arranged within the common harness.

The method may help prevent fluid ingress between the wires. Trapped moisture may lead to damage to cable jacketing and/or weaken the cables. The method may remove air pockets between cables. At altitude air pockets may expand and lead to damage or harness explosion. The method may help prevent movement and/or fretting between the wires, for example due to vibration during operation. The method may reduce vibration in the cable harness. Reduced vibration may provide an advantageous low tribo-electric noise solution for accelerometer cables. Movement and/or fretting between the wires may degrade the signal passing through the wires. The method may provide a common harness with an improved method of locating the cable inners at defined positions in the common harness.

The step of heating the plurality of cables may further comprise removing air pockets from between the plurality of cables.

The step of heating the plurality of cables may comprise melting or sintering the cables together.

The method may provide an improved method of joining the cables and removing air from between the cables. Sintering may comprise heating the cables to cause the coatings to coalesce without liquefaction of the coatings. Sintering may comprise heating a material to cause it to coalesce without liquefaction, for example without macroscopic liquefaction. Sintering may provide a bonding mechanism of mechanical interlocking of the amorphous regions of the polymer.

An outer profile of the solid cross section may be defined by a shape of the mould tool. An outer profile along the length of the common harness may be for connecting to a component or connection feature.

The step of heating the plurality of cables may comprise applying heat and/or pressure and/or a vacuum to the plurality of cables through the mould tool.

The method may provide improved removal of any air pockets.

The step of heating the cable bundle may comprise passing a current through at least one of the plurality of cables.

Each cable may have a circular outer cross section.

The method may provide an improved geometry for sintering the cable coatings together to produce a solid cross section whilst improving the simplicity of supplied components. The method may provide an improved geometry suitable for sintering.

Each cable may be a twin core cable for a gas turbine engine.

The method may provide an improved harness for gas turbine engine cables for withstanding the operational conditions of gas turbine engines.

Each cable may comprise heat treatable packer material.

The method may improve the ease of providing a solid cross section. The method may provide a more circular twin core cable.

The cable inner may comprise at least one insulating layer. Additionally or alternatively, the cable inner may comprise at least one layer of shielding.

The step of heating the plurality of cables may further comprise forming a common harness wherein the cable inners are aligned with a lengthwise axis of the common harness.

A length of the common harness may be greater than one metre.

The step of providing a plurality of cables may comprise providing at least 10 cables.

The step of providing a plurality of cables may comprise providing a safety critical cable, and the step of locating the plurality of cables within a mould tool may comprise locating the safety critical cable towards the centre of the mould tool.

The method may provide improved shielding to the safety critical cable.

The step of providing a plurality of cables may comprise arranging the plurality of cables into a plurality of rows and securing each row of cables together.

The method may improve the ease of locating the cables within the mould tool.

The method may further comprise the step of locating heat treatable filler within the mould tool.

The method may improve the ease of providing a solid cross section. The heat treatable filler may be the same material as the coatings.

The method may further comprise the step of locating clipping and/or mounting and/or connecting and/or branch portion features within the mould tool.

The method may provide a solid harness and may improve the integrity of harness mounting features.

The method may further comprise the step of locating a PCB within the mould tool.

The method may allow a flexible PCB to take advantage of the strength of the cable harness. The method may allow a greater number of signals to be carried in a smaller volume.

The common harness may be rigid for providing structural support to a component.

The method may allow other components to be mounted on the harness. For example this may reduce the part count and/or weight of an assembly that the harness attaches to. For example this may reduce the part count and/or weight of a gas turbine engine.

The cable coatings and/or heat treatable packer material and/or heat treatable filler may be formed of a thermoset or thermoplastic material.

The cable coatings and/or heat treatable packer material and/or heat treatable filler may be formed of ETFE, PTFE or a PAEK derivative.

The method may further comprise the step of securing the sintered harness in a composite material structure.

According to an aspect there is provided a method of assembling a gas turbine engine, the method comprising the steps of manufacturing a cable harness as claimed herein, and attaching the sintered harness to the gas turbine engine.

According to an aspect there is provided a twin core cable for a gas turbine engine comprising a twin core cable inner, wherein the twin core cable inner comprises at least one conductor, and a coating for coalescing the cable to another component. The coating may be made of ETFE, PTFE or a PAEK derivative.

The cable inner may comprise heat treatable packer material. The cable inner comprises at least one conductor.

The packer material may improve the circularity of a twin core cable for improving the ease of sintering.

According to an aspect there is provide a cable pre-assembly comprising a plurality of the twin core cables as claimed herein, wherein the twin core cables are secured together in a row.

The pre-assembly may improve the ease of locating the cables within a mould tool for further processing.

According to an aspect there is provided a cable harness comprising a plurality of cable inners and a common harness, wherein each cable inner comprises at least one conductor, and wherein the common harness has a solid cross section and the cable inners are arranged within the common harness.

The cable harness may be rigid such that it can structurally support a component. The cable harness may be for a gas turbine engine. The component may be a gas turbine engine component.

The cable harness may comprise more than 10 cable inners.

A solid cross section may comprise no air pockets and/or voids. A solid cross section may comprise substantially no air pockets and/or voids, for example a solidity of 90%, 95%, 99% or 99.9%. A solid cross section may comprise 90%, 95%, 99% or 99.9% no air pockets and/or voids. A solid cross section may be non-porous. A solid cross section may have an outer profile. The outer profile may define the extent of material of the cross-section. A solid cross section may be such that solid material fills all of the area within the outer profile of the cross section. A solid cross section may consist of only common harness and a plurality of cable inners. A solid cross section may be defined wherein an/each area of the cross section defined by a polygon (for example a two-dimensional polygon with a polygon area, e.g. not a line) whose vertices are the centres of the cables is solid material.

The step of heating the portions may comprise heating the portions to a temperature that causes an alteration in the configuration of the coating but not of the cable inners.

The step of heating the portions may comprise heating the portions in a vacuum. The step of heating the portions may comprise providing a vacuum around the portion and/or plurality of cables. The vacuum may ensure that there is no trapped gas in the common harness. The vacuum may ensure that as the coatings consolidate no gas is trapped between them.

The coating may be an insulating material. The common harness may be an insulating material. The common harness may provide insulating properties to the cable inners.

The portions of the cable inners may be arranged within the common harness such that each cross section of a/each cable, along the portion, is surrounded by the common harness (for example solid material of the common harness). The portions of the cable inners may be arranged within the common harness such that they are embedded within the common harness and/or be secured in a fixed position within the common harness and/or buried in the common harness and/or integral (or integrated into) within the common harness. The common harness may refer to solid material of the common harness.

Each cable may be an elongate conductor with a cable axis along its length. The mould tool may comprise an elongate recess with a mould axis along its length. The mould tool may be box type construction. The step of locating may comprise arranging each cable within the mould tool such that each cable axis is aligned with the mould axis. The step of locating may comprise arranging the cables within the mould tool in a series of rows. The step of locating may comprise arranging the cables within the mould tool in an ordered pattern such that the inner cables have an ordered pattern within the sintered harness. The common harness may have a harness axis. The common harness may be elongate. The harness axis may be a lengthwise axis of the common harness, for example along the elongate harness. Each cable axis may be aligned with the harness axis.

A portion of the cables may comprise the operating length of the cables, for example including or excluding connecting portions. A portion may be a section of the operating length, for example a section that locates within a loom roller, for example where the cables are passed through loom rollers. A portion of the cables may comprise the whole cable. A portion of the cables may comprise a significant (for example more than 70% or more than 80% or more than 90%) portion of the length of the cables. A second and/or third portion of each cable, not located within the mould tool, may be for connection to another component. Each cable may consist of a portion for locating within a mould tool and a second and/or third portion.

The mould tool may be configurable to apply heat and pressure to the portions of the cables. The mould tool may comprise a plurality of flat mould sides. The mould tool may comprise a plurality of profiled sides. The mould sides may be moveable with respect to each other. The sides and/or surfaces of the mould tool may comprise heaters for applying heat to the plurality of cables. Alternatively the mould tool may be configurable and/or adaptable to be able to transfer heat from a source external to the mould tool to the plurality of cables. The mould tool may comprise a mould recess and a mould press, wherein the mould press may be configurable to slide within the mould recess to reduce a volume within the mould recess. The mould tool may have a mould axis. The mould tool may have a cross sectional shape along the mould axis for imparting a cross section to the common harness. The mould tool may be configurable to be able to reduce the volume within the mould tool to apply pressure to the contents of the mould tool. The mould tool may comprise loom rollers configurable to apply heat and pressure to the portions of the cables progressively along their length.

Each coating may surround the cable inner along a/the length of the cable inner. Each coating may encase a cross section of each cable inner. Each coating may evenly surround each cable inner.

Consolidating the coating of each cable to form a common harness may comprise integrally joining and/or coalescing and/or combining the coating of each cable together. The coating of each cable may change shape and/or change phase during the step of consolidating. The coating of each cable may form a portion of the common harness after the step of heating.

After the step of locating there may be air pockets between the plurality of cables. For example there may be air pockets due to voids between the cables. There may be air pockets where due to the shape of the cable cross section (for example circular cross section) there is a packing density less than 1 (where 1 is a solid fill). There may be air pockets where due to the shape of the cable cross section they cannot be packed such that they fill a volume (for example the initial volume of the mould tool). The step of heating may comprise removing the air pockets and/or voids. Air pockets may be voids when a vacuum is applied to the plurality of cables. For example there may be a mould first volume and a mould second volume. The difference in volume between the mould first volume and the mould second volume may be equal (for example substantially equal) to the volume of air pockets/voids. The step of heating the portions may comprise reducing the volume within the mould tool to remove air pockets. The mould tool may be configurable and/or adaptable to remove air from its inner volume during the step of heating the portions.

Sintering may comprise heating the plurality of cables such that the coatings consolidate and/or coalesce without causing liquefaction of the coatings. Sintering may comprise integrally joining and/or consolidating the coatings through diffusion without causing liquefaction of the coatings. The coatings may be made of a sinterable material. The coatings may be made of a solid sinterable material. Alternatively the coatings may comprise a powder material suitable for sintering.

The step of heating may comprise passing a current through one or more of the cables such that the temperature of the coating of the cable is increased due to the resistance of the wire. The current may be high enough to heat the coatings to a temperature such that they consolidate to form a solid harness.

A twin core cable may typically comprise two conductors. However greater or less numbers of conductors may be present depending upon the embodiment. Typically the conductors are made of copper. Typically each conductor is surrounded (for example coated or encased) by a layer of insulation. The conductors may have a circular cross section. The outer profile of the insulation may have a circular cross section. The insulation may be an annular layer that surrounds (for example is concentric with) the inner circular conductor. A layer of shielding may surround all (for example both, in the embodiment where there are two conductors) the insulation. The shielding may have a circular or elliptical outer cross section. The shielding may be an annular layer. Typically the shielding has an elliptical cross section that encompasses (e.g. fully surrounds) the two conductors and insulation. The cable thus described may be the cable inner. The cross sectional outer profile of the cable inner may be elliptical. Additionally, typically a twin core cable then has another layer of insulation surrounding the shielding. However alternatively the twin core cable may have a coating as claimed herein surrounding the shielding.

A gas turbine engine may comprise twin core cables for transmitting electrical power and signals to and from the individual electrical components. Twin core cables may be suitable for the electrical power requirements of gas turbine engines.

A twin core cable may be an example of a wire or cable. A wire or cable typically may be an elongate flexible structure. A wire or cable typically may have a first end and a second end. A wire or cable may have a length along the elongate flexible structure between the first end and the second end. A wire or cable may have a cable axis along the length of the elongate flexible structure. A wire or cable may have a cross section in a plane perpendicular to the cable axis.

The cable may comprise heat treatable packer material. The heat treatable packer material may be positioned between the insulating layer and the coating. The heat treatable packer material may be the same material as the coating. The heat treatable packer material may improve the circularity of the cable, for example where the outer cross sectional profile of the insulating layer is elliptical. The heat treatable packer material may form a portion of the common harness after the step of heating. The step of heating may be such that the coatings and the heat treatable packer material of each cable consolidates to form a common harness. The heat treatable packer material may be rods of material. The heat treatable packer material may be wound around the inner cable. Where the outer cross sectional profile of the insulating layer is elliptical, there may be two strands of heat treatable packer material adjacent the positions of minimum radius of the outer cross sectional profile of the insulating layer. There may be a number of heat treatable packer material suitable for ensuring the cable. For example in a three core cable there may be one strand of packer material. The coating may be wrapped around the cable inner and the strands of heat treatable packer material. The addition of heat treatable packer material to the cable may improve the circularity of the outer profile of the cable.

A circular outer profile of each cable may improve the homogeneity of the common harness. A more homogenous common harness may have less or no air pockets/voids in it. For example a circular outer profile may improve the sinterability of the plurality of cables to achieve a homogeneous common harness. For example the step of locating at least a portion of each cable may comprise arranging each cable within the mould tool such that it is abutting adjacent cables. The coatings of each cable may contact the coating of another cable. Circular outer profiles of each cable may result in more regular contact geometries across the plurality of cables. This may result in the sinter process acting evenly across the plurality of cables.

The common harness may have a length of more than half, one, two, three, four or five metres. The common harness may be of suitably large construction for fitment around a gas turbine engine. For example the common harness may have a curvature along its length for fitment around the casing of a gas turbine engine. For example the common harness may have a length suitable for transmitting power to components distributed around the externals and/or casing of a gas turbine engine.

The step of providing a plurality of cables may comprise providing at least: 5, 10, 20, 30, 40, 50, 60, 75, 100, 125, 150, 175 or 200 cables. The step of locating at least a portion may comprise arranging the plurality of cables within the mould tool in a series of layers. The step of locating may comprise arranging the plurality of cables within the mould tool in a regular geometric pattern, for example wherein the centres of each cable form a pattern of squares or triangles with respect to each other. The step of locating may comprise arranging the cables such that their centres (in a cross section through the mould tool) form a repeating pattern of polygons. The polygons may be such that a cable centre is located within a polygon formed by the centres of three or more other cables. The arrangement of centres of the plurality of cables at a cross section through the mould tool may be constant along the length of the mould tool. Alternatively the arrangement of centres of the plurality of cables at a cross section through the mould tool may vary along the length of the mould tool.

A safety critical cable may be a cable that is designated to transfer power to a safety critical component in use. The safety critical cable may be located in a position at the centre of a cross section of the mould tool parallel to the mould axis. The safety critical cable may be located such that it is closer to the centre of the mould tool along a portion of the safety critical cable. The safety critical cable may be located close to the centre of the mould tool for enhanced protection during use. After the step of heating, the safety critical cable may be closer to the lengthwise centre of the common harness than the outer lengthwise surfaces of the common harness. Segregation may be embedded within the common harness to provide protection from HIRF (High Intensity Radiated Fields) or circuit shorting.

The plurality of cables may be provided in a plurality of rows. Each row may comprise a number of cables, for example at least 2, 5, 10 or 20 cables. Each row may be secured together before being located within the mould tool, for example by knitting, braiding or sleeving. The cable may be parallel to adjacent cables, with additional row material used for knitting, braiding or sleeving. The additional row material may be made of the same material as the coating.

Heat treatable filler may be wound between the cables. Heat treatable filler may be embedded between the cables. Heat treatable filler may be made of the same material as the coatings. Heat treatable filler may form part of the common harness after the step of heating. The step of heating may comprise heating the heat treatable filler such that it consolidates with the coatings (and any other similar material) to form the common harness. Heat treatable filler may be arranged to improve the evenness of the sintering process and/or the homogeneity of the common harness.

Additional features may be included within the mould, for example clipping and/or mounting features. By locating the features within the mould before the step of heating the features may become integral to the common harness or be integrally embedded in the common harness, thereby improving their structural characteristics. Including the clipping and/or mounting features within the common harness may reduce the part count of a component, for example a gas turbine engine. Clipping features may allow the common harness to be easily clipped to a gas turbine engine.

The common harness may be attached (for example welded and/or attached via the clipping and/or mounting features) to a substrate, for example a metallic, polymeric or composite substrate. The substrate may provide further strength or protection at elevated temperatures. The interface between the common harness and the substrate may allow outgassing of volatiles to accelerate burn-on. The interface between the common harness and the substrate may be capped and/or folded to prevent escape of volatile gasses at the edges of the common harness.

A PCB (optionally a flexible PCB) may be located within the mould tool. A PCB (optionally a flexible PCB) may be located within the mould tool such that a PCB is bonded and/or embedded to one or more of either side or middle of the common harness after the step of heating. PCB interface features may be located within the mould tool, for example such that PCB interface features are embedded within the common harness to allow signals to exit the PCB.

The cable harness may comprise a wrapper. The wrapper may be applied to the outside of the common harness to provide protection from damage and/or encapsulation. The wrapper may be a treatment. The wrapper may be purely cosmetic in nature (to cover over porosity or jacket print-through). The wrapper may provide additional stiffening to the common harness in a constant or nonlinear manner and/or prevent the bundle from being damaged. The wrapper may comprise a metallic mesh or carbon based material to provide protection from lightning. The wrapper may contain features to allow for organics to be outgassed in a fire situation to prevent burn-on.

The mechanical properties of the coatings (and any other parts made of the same material, for example the heat treatable filler and/or heat treatable packer material) may be altered by the step of heating. For example before the step of heating, the coatings may be relatively soft and/or flexible. For example after the step of heating, the coatings may be relatively hard and/or rigid. The common harness may be rigid such that it can support its own weight without changing its shape. The common harness may be rigid such that it can support its own weight and have other components, for example auxiliary gas turbine components such as pumps and valves, supported off it without changing its shape.

The coating may be a plastic. The coating may be made of a sinterable plastic. The coating may be made of a sinterable plastic that is rigid after it has been sintered. For example, the coating (and other material for consolidation) may be made of ETFE (ethylene-tetrafluoroethylene) orPTFE (polytetrafluoroethylene). For example, the coating (and other material for consolidation) may be made of a PAEK (polyaryletherketone) derivative, for example FEP (fluorinated ethylene propylene), PFA (perfluoroalkoxy polymer resin) or PEEK (polyether ether ketone), optionally with environmental protection.

The step of providing a plurality of cables may comprise providing a plurality of cables from one or more cable looms.

A plurality of cable looms may be provided, each providing one or more cables, and the cables may be joined together from each cable loom into a plurality of cables after being fed from the cable looms. A plurality of cables may comprise buffer material for providing mounting and/or clipping features to the common harness.

The mould tool may comprise a loom roller. The loom roller may be profiled to impart an outer profile to the common harness. The step of heating the portions may comprise feeding the plurality of cables through the loom roller to apply heat and pressure to the plurality of cables. The step of heating the portions may comprise feeding the plurality of cables through a pre-heater before feeding the plurality of cables through the loom roller. The mould tool may comprise a series of loom rollers. Each loom roller may have a different profile. A loom roller may comprise a pair of rollers and the portion may be located between the pair of rollers. The pair of rollers may translate with respect to each other. The pair of rollers may translate with respect to each other during the step of heating the portions such that the outer profile of the common harness varies along its length. The pair of loom rollers may translate with respect to each other along their rotational axis and/or towards or away from each other. The pair of loom rollers may translate with respect to each other in a direction other than along their rotational axis.

The cable harness may be formed into an arc. Arc roller formers may be provided for forming the cable harness into an arc.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a side view of a typical gas turbine engine;
**Figure 2** is a sectional side view of a gas turbine engine comprising a cable harness in accordance with the present disclosure;
**Figure 3** shows the cable harness at various stages of the disclosed method; **Figure 3a** shows a cross section through a cable; **Figure 3b** shows a cross section of a plurality of cables located within a mould tool; **Figure 3c** shows a cross section through the mould tool during a step of heating; **Figure 3d** shows a cross section through the resulting common harness;
**Figure 4** shows a cross section though a cable harness comprising a mounting feature;
**Figure 5** shows a top down view of a common harness with branches;
**Figure 6** shows a sectional side view of a connection between a harness and a component;
**Figure 7** shows a cross section of an alternative cable for use in a cable harness;
**Figure 8** shows an alternative connection between a harness and a component; **Figure 8a** shows a plan view of the female connector; **Figure 8b** shows a sectional side view of the female connector; **Figure 8c** shows a sectional side view of a male and female connector connected;
**Figure 9** shows an alternative connection between a harness and a component; **Figure 9a** shows a square connection; **Figure 9b** shows an angled connection
**Figure 10** shows a diagrammatic view of an alternative manufacturing process using loom rollers;
**Figure 11** shows a sectional view of the loom rollers; **Figure 11a** shows a sectional view of the loom rollers with a plurality of cables passing between them for consolidation into a cable harness; **Figure 11b** shows a cross section of the resulting cable harness.

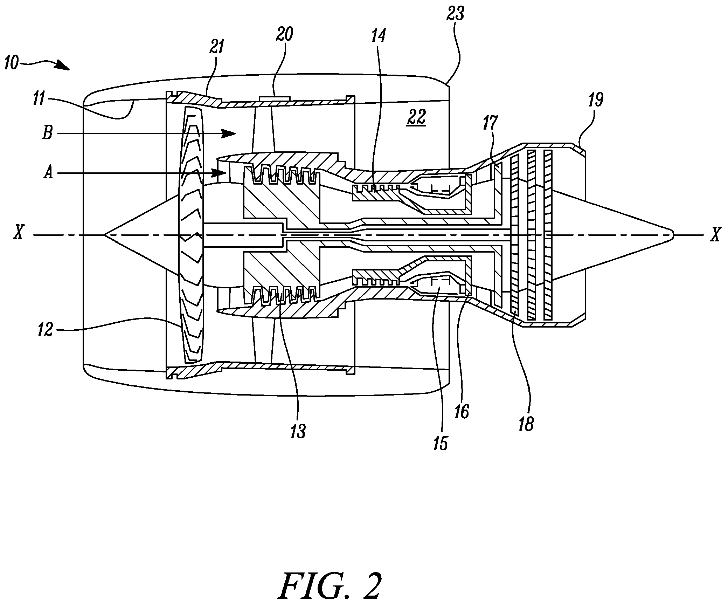

With reference to Figure 2, a gas turbine engine is generally indicated at 10, having a principal and rotational axis X-X. The engine 10 comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and an exhaust nozzle 19. A nacelle 23 generally surrounds the engine 10 and defines both the intake 11 and the exhaust nozzle 19.

A casing 21 surrounds the front end of the gas turbine engine 10, for example the fan 12 and intermediate pressure compressor 13 as shown in the Figure 2 example. The casing 21, which may also be known as the outer casing, supports a number of auxiliary components on its radially outer surface. A cable harness 20 is mounted to the casing 21 for transmitting power to components mounted around and off the casing 21 in the Figure 2 example.

The gas turbine engine 10 works in the conventional manner so that air entering the intake 11 is accelerated by the fan 12 to produce two air flows: a first air flow A into the intermediate pressure compressor 13 and a second air flow B which passes through a bypass duct 22 to provide propulsive thrust. The intermediate pressure compressor 13 compresses the airflow directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high 16, intermediate 17 and low 18 pressure turbines drive respectively the high pressure compressor 14, intermediate pressure compressor 13 and fan 12, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

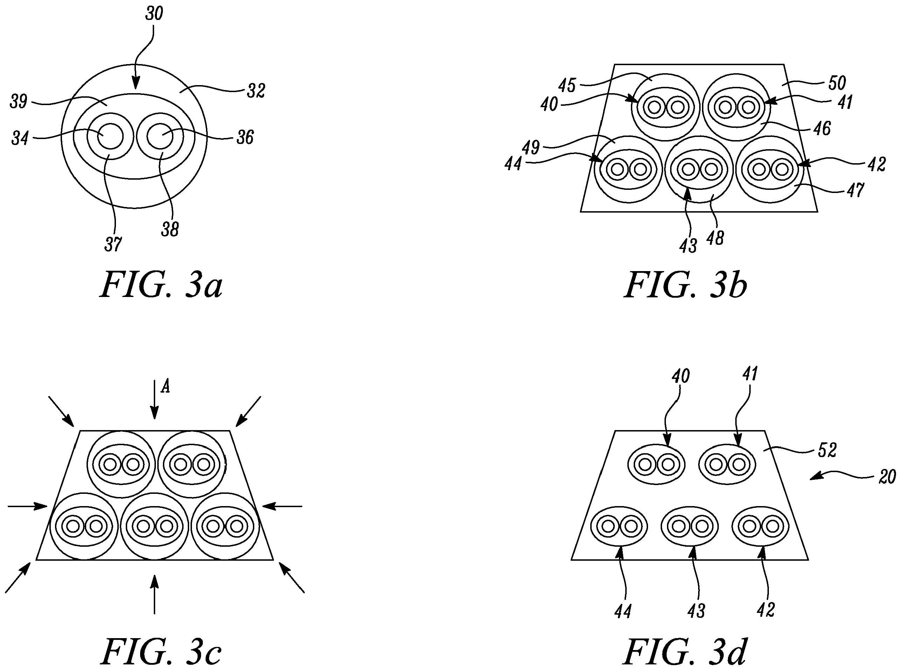

Figure 3 shows different stages of the method of manufacturing a cable harness from an individual cable in Figure 3a, to a plurality of cables in a mould tool in Figure 3b, the process of heating the mould tool in Figure 3c to the common harness in Figure 3d.

Figure 3a shows a typical cable. Figure 3a shows a typical twin core cable for a gas turbine engine. The cable has two conductors, a first wire 34 and a second wire 36. The first wire is surrounded by a coating of a first insulation 37. The second wire 36 is surrounded by a coating of a second insulation 38. Shielding 39 surrounds both the first insulation 37 and the second insulation 38. A coating 32 surrounds the shielding 39. The first wire 34, second wire 36, first insulation 37, second insulation 38 and shielding 39 form a cable inner 30.

The first wire 34 and the second wire 36 are elongate wires with a circular cross section. The first wire 34 and the second wire 36 are conductors for transmitting power to components. The first wire 34 and the second wire 36 are made of copper in the Figure 3a example. The first wire 34 and the second wire 36 are each surrounded by a layer of insulation. With respect to the first wire 34, a layer of first insulation 37 surrounds and/or encases the first wire 34. The first insulation 37 is an even annular layer with a circular outer cross section concentric with the cross sectional centre of the first wire 34. The second wire 36 and second insulation 38 is of similar construction.

The shielding 39 surrounds and/or encases both the first insulation 37 and the second insulation 38. The shielding 39 has an elliptical outer cross sectional profile. The elliptical outer cross sectional profile allows the shielding to surround the first insulation 37 and second insulation 38 in a space and material constrained manner. The shielding 39 surrounds the insulations such that the outer surfaces of the first insulation 37 and second insulation 38 are fully in contact with the shielding 39.

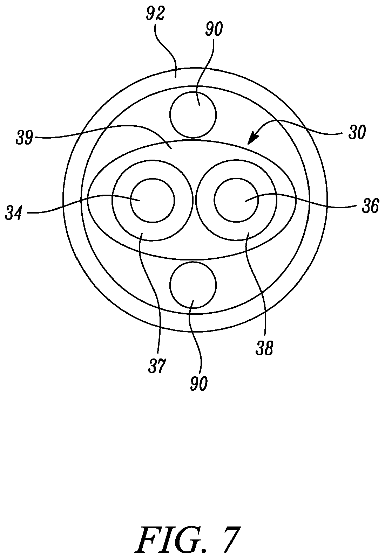

The shielding 39 is surrounded and/or coated with a layer of coating 32. The layer of coating 32 encases the layer of shielding 39. The layer of coating 32 is an annular layer with an inner cross sectional profile that, in the Figure 3a example, matches the outer cross sectional profile of the shielding 39. In the Figure 3a example, the coating 32 has a circular outer cross sectional profile. In the Figure 3a example, the thickness of the coating 32 varies around the circumference of the shielding 39. Alternatively the coating 32 may have a different configuration, for example as shown in Figure 7.

Figure 3b shows a plurality of cable inners: a first cable inner 40, second cable inner 41, third cable inner 42, fourth cable inner 43 and fifth cable inner 44. Figure 3b shows a plurality of coatings surrounding each respective cable inner: first coating 45, second coating 46, third coating 47, fourth coating 48 and fifth coating 49. Each combination of cable inner and coating forms a cable. The plurality of cables are positioned in a mould tool 50.

In the Figure 3b example there are five cables. The cables are arranged in two rows, a first row of three cables and a second row of two cables. The first row and second row are offset from each other so that they efficiently fill the space of the mould tool 50. The cables are arranged such that each coating abuts coatings of adjacent cables. It can be seen in Figure 3b that because each cable is circular, each abutment shares the same geometry. For example the first coating 45 abuts the second coating 46, fourth coating 48 and fifth coating 49.

In the Figure 3b example the mould tool 50 has two sides and a top and a bottom. The shape of the mould tool 50 matches the shape of the plurality of cables. The number of cables provided fills the mould tool 50. In the Figure 3b example the mould tool is a polygon. In the Figure 3b example the mould tool 50 is a trapezoid. In the Figure 3b example the mould tool 50 has four sides.

Figure 3c shows the arrangement of Figure 3b during a step of heating the plurality of cables. Arrows A show the direction of heat being passed into the mould tool. In the Figure 3b example heat and pressure are applied to the plurality of cables through the mould tool, however in other embodiments only heat is applied to the mould tool. In other embodiments the heat and/or pressure may be applied under a vacuum. When a vacuum is applied to the plurality of cables, the air pockets/voids will not contain any gas. In the Figure 3c example, heat and/or pressure are applied uniformly around the mould tool, however in other embodiments heat and pressure may not be applied uniformly. For example in other embodiments one side of the mould tool may be translatable with respect to the other sides such that it can reduce the volume within the mould tool.

The arrows A show the direction of reduction in volume of the mould tool. Figure 3d shows the common harness after a step of heating the plurality of cables. The common harness has a plurality of cable inners: first cable inner 40, second cable inner 41, third cable inner 42, fourth cable inner 43 and fifth cable inner 44. The cable inners are arranged within and/or embedded within and/or surrounded by the common harness 52.

The common harness 52 is formed of the coatings, for example the first coating 45, second coating 46, third coating 47, fourth coating 48 and fifth coating 49. During a step of heating the coatings consolidate into the common harness 52. For example the coatings sinter together and fill the mould tool. For example the coatings melt together and fill the mould tool.

The outer profile of the common harness 52 may be defined by the mould tool. The outer profile of the common harness 52 may be defined by a second cross section of the mould tool. The second cross section of the mould tool is the cross section the mould tool forms at the end of the step of heating the plurality of cables. A first cross section of the mould tool may be the cross sectional shape formed in Figure 3b. The mould tool may be configurable to move between the first cross section and the second cross section.

A method of manufacturing a cable harness will now be described with regard to Figures 3a to 3d. A plurality of cables of the type shown in Figure 3a are provided. The plurality of cables are located within a mould tool according to Figure 3b. Heat (and optionally pressure) is applied to the plurality of cables according to Figure 3c, optionally in a vacuum. The common harness shown in Figure 3d is produced as a result of the heating.

The arrangement of cable inners is maintained between Figure 3b and Figure 3d. However the cable inners may have moved closer together due to the step of heating and/or applying pressure to the plurality of cables. The cable inners are surrounded by the common harness 52 such that in a cross section, for example the cross section shown in Figure 3d, the outer profile of each cable inner is in contact with solid material of the common harness 52. A cross section of the common harness 52, for example that shown in Figure 3d, contains no air pockets within the common harness 52 and/or the common harness 52 is solid material. For example within an outer profile of the cross section of the common harness in Figure 3d, there is only solid material of the common harness and the cable inners.

Figure 3b shows air pockets between the cables before the step of heating. For example there is a space between the first coating 45, the second coating 46 and the fourth coating 48. This may be referred to as an air gap, void or pocket. Under a vacuum, an air gap, void or pocket contains no gas. In Figure 3d, it can be seen that there is no air pocket, void or pocket between the first cable inner 40, the second cable inner 41 and the fourth cable inner 43. Therefore such an air pocket, void or pocket has been removed during the step of heating.

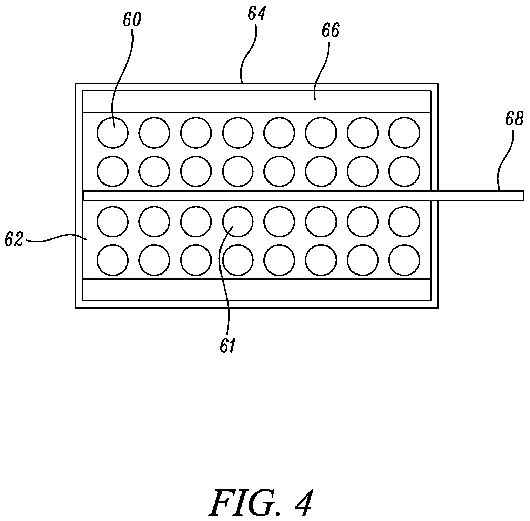

Figure 4 shows a cross section through an alternative embodiment of a cable harness. Figure 4 shows a common harness 62, a plurality of cable inners 60, two PCBs, a mounting feature 68 and a wrapper 64.

The mounting feature 68 may be a bracket or a clipping feature. The mounting feature 68 may be for attaching the cable harness to a component, for example a gas turbine engine. Figure 4 shows an arrangement of cable inners 60 in four rows. Each row has the same number of cable inners 60 and is positioned directly above the row below. In Figure 4, the shape formed by adjacent cable inners 60 is a square. The mounting feature 68 is positioned with a plurality of cables and is heating together with the plurality of cables to produce the cable harness shown in Figure 4. The mounting feature 68 is integrally embedded within the cable harness, for example it extends into the common harness 62 between cable inners 60.

The cable harness has two PCB 66 wafers attached to it. The common harness 62 is of square cross section. The common harness 62 has PCBs 64 attached across two of its four sides. The cable harness comprises a wrapper 64 surrounding the common harness 62 and PCBs 66. The wrapper provides an additional layer of protection and/or additional structural strength. The mounting feature 68 extends outwardly from the common harness 62. The mounting feature 68 extends outwardly beyond the wrapper 64.

Figure 4 shows a safety critical cable 61. A safety critical cable may transmit power to a safety critical component. For example a safety critical cable 61 may transmit power to a component that is required for a safety system. A safety critical cable 61 may transmit power to a component that is more safety critical than the components the other cables serve. The safety critical cable 61 is located towards the centre of the cable inners 60. The safety critical cable 61 is located towards the centre of the cross sectional area of the cable harness shown in Figure 4. The safety critical cable 61 is located in a position where it is the cable closest to the centre of the cable harness cross section shown in Figure 4.

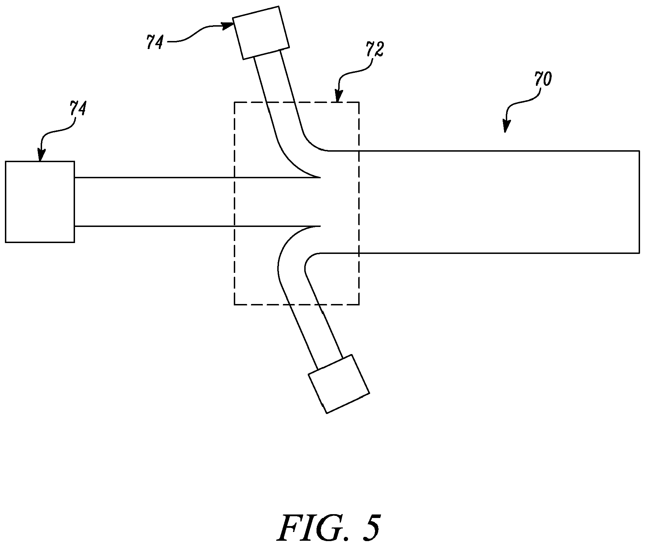

Figure 5 shows a top down view of a cable harness. Shown in Figure 5 is a common harness 70, a branch portion 72 and connectors 74. The common harness 70 comprises a plurality of cable inners embedded within it (not shown in Figure 5). The common harness splits within the branch portion 72. Whilst Figure 5 shows the common harness splitting in a two dimensional plane, alternatively the common harness may split into different directions in a three dimensional space. The common harness 70 may be manufactured in a mould tool that is shaped to accommodate the branch portion 72. The method claimed herein may therefore be used to produce cable harnesses that branch into multiple branches. This allows for a particularly space optimised solution of arranging the cables. Each branch may comprise a connector 74 for interfacing with a component. Additionally a branch portion may comprise a pre-moulded boot. A pre-moulded boot may be made of the same material as the cable outers. The pre-moulded boot may be in the shape of the branch portion 72 before being placed in the mould tool. The pre-moulded boot may be for preventing damage during operation, for example preventing the harness unpeeling.

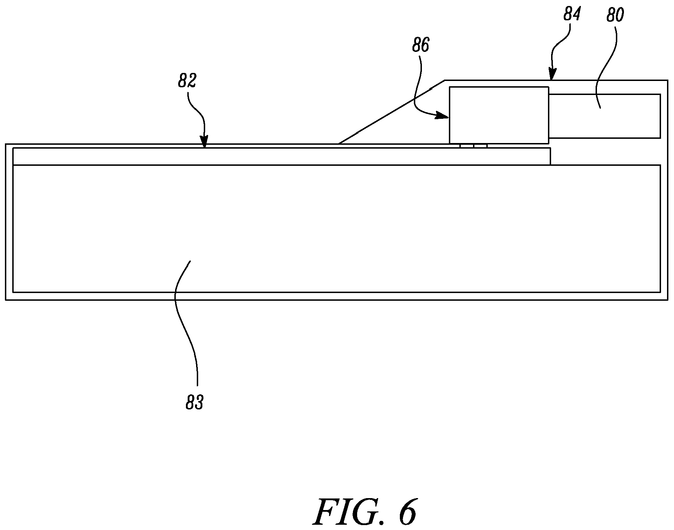

Figure 6 shows the interface between the harness 80 (for example a common harness or sintered harness) and a component 83. The component comprises a PCB 82. The PCB 82 may be capable of transmitting electrical signals. A connector 86 is provided between the common harness 80 and the PCB 82. The connector comprises an interface block and pins that interface with the PCB 82.

The connector 86, common harness 80 and PCB are surrounded by a wrap 84. The wrap 84 provides additional protection to the components within in the operating environments that the component experiences.

The component 83 may be a common harness. The component 83 may be a common harness as claimed herein. A signal may be transmitted in the PCB 82 along the sintered harness 83 and then transferred from the PCB 82 to the harness 80 for connection to a second component, for example via a standard electrical connector.

Figure 7 shows an alternative cable for use in a common harness. In the Figure 7 example there is shown the same cable inner 30 as in Figure 3. However in alternative arrangements there may be a different arrangement of cable inner, for example with a different number of wires. The cable inner 30 has a first wire 34, a second wire 36, a first insulation 37 surrounding the first wire 34, a second insulation 38 surrounding the second wire 36, and a shielding 39 surrounding both the first insulation 37 and second insulation 38. The two wires in the cable inner 30 mean the resulting outer profile of the shielding 39 is elliptical in the Figure 7 example.

Two packer material 90 are arranged adjacent the shielding 39. In the Figure 7 example the packer material 90 are arranged adjacent the point on the elliptical outer profile of the shielding 39 of minimum radius. A layer of coating 92 then surrounds both the cable inner 30 and the two packer material 90.

The embodiment shown in Figure 7 shows an arrangement that provides a circular cable, for example the outer cross sectional profile of the coating 92 is circular, whilst the coating 92 is of even thickness around its circumference. This is advantageous as it is easier to produce a coating 92 of even thickness, for example it may be applied as a tape wrapped around the cable inner 30 and packer material 90. The packer material 90 allows for the difference between the cross sectional inner profile of the coating 90 and the cross sectional outer profile of the shielding 39. As discussed herein, a circular cable provides for greater homogeneity of the resulting common harness, for example a common harness with fewer or no voids.

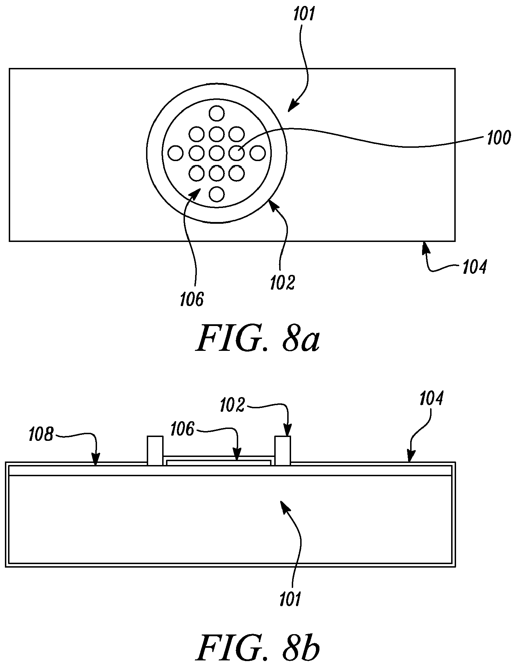

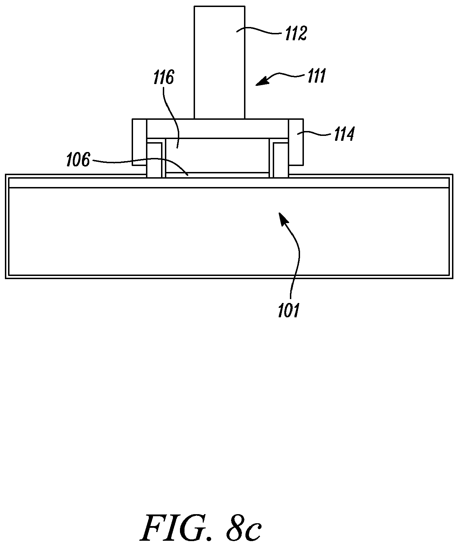

Figure 8 shows an embodiment of a connector between a PCB 108 and a component. The component may be a cable harness as claimed herein. Figures 8a and 8b show the female connector 101 and Figure 8c shows the connection between the female connector 101 and the male connector 111.

Figure 8a shows a plan view of the female connector 101. The same female connector 101 is shown in Figure 8b as a side cross section. Figure 8a shows a threaded boss 102, for example a threaded polymer boss, that is a circular, annular protrusion from the PCB 108. Within the threaded boss 102 is arranged a wafer 106 with a plurality of spring loaded contacts 100. In other embodiments there may be a different number or arrangement of contacts. The PCB is arrangement against a component 110. The component 110 may be a structural component or may be a cable harness. The component 110 and PCB 108 are surrounded by a cosmetic wrapper 104. In the Figure 8a example, the cosmetic wrapper 104 surrounds the component 110 and PCB 108 on all sides apart from at the location of the threaded boss 102, to allow a location for the signal to enter and exit the PCB 110.

Figure 8c shows the male connector 111. The male connector 111 has an interface boss 114 on the end of the male component 112. The male component 112 may be, for example, a cable bundle or cable harness. The interface boss 114 may be internally threaded for connection to the threaded boss 112 of the female connector 101. A connector 116 extends from the interface boss 114.

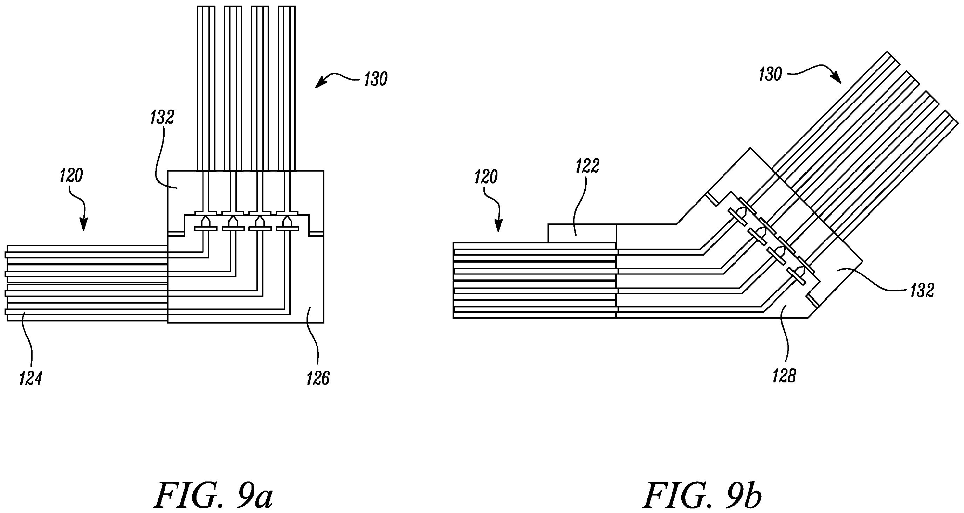

In a method of connecting a cable harness, a first connector, for example attached to and/or interfacing with (for example interfacing with individual cables of) a cable harness as claimed herein, is connected to a second connector, for example attached to and/or interfacing with a component and/or second cable harness. With regard to Figure 9, when the male connector 111 is screwed into the female connector 101, for example during a method of connecting a cable harness, using the respective threaded connections (or connection method if different to the Figure 8 example) the connector 116 extends into the female connector 101 to contact the spring loaded contacts 100. In the figure 8 example, with the contacts 100 being spring loaded, a good contact is made between the connector 116 and the spring loaded contacts 100 across a depth of insertion of the connector 116 and the female connector 101, thereby allowing for tolerances. Signals may then pass between the component 110 and the male component 112.

Figure 9 shows examples of connectors to connect the cables of a cable bundle, for example a cable harness as claimed herein, to another cable bundle, for example a cable harness as claimed herein.

Figure 9a shows a sectional side view of a square connector. The square connector interface 126 connects a first cable bundle 120 with a second cable bundle 130. The first cable bundle 120 and second cable bundle 130 may be cable harnesses. The first cable bundle 120 is connected to the square connector interface 126. The second cable bundle 130 is connected to the cable connector 132. The cable connector 132 and square connector interface 126 interface with a bossed connection, for example an annular bossed connection, for example a threaded boss connection. An individual cable within the bundle, for example cable 124, has a connection to an individual cable in the cable bundle. Both the cable connector 132 and square connector interface 126 provide for individual connections for each cable. The square connector interface 126 turns each cable by a right angle to allow the direction of the two cable bundles to be different.

Figure 9b shows the same arrangement as Figure 9a, however instead of a square connector interface 126 there is an angled connector interface 128. Further there is additionally a support arm 122 that extends from the angled connector interface 128 along the cable bundle 120.

The connection apparatus and/or methods shown in the examples of Figures 8 and 9 provide a space optimised, efficient connectors for a cable harness, for example for connecting individual cables of a cable harness to their respective components. For example during manufacture or maintenance, the cable harness can be quickly and easily connected to other components and/or other cable harnesses. This reduces manufacture and/or maintenance time and improves quality of the product. During the method of manufacturing a cable harness, the common harness may have a profile that is suitable for interfacing with a connection apparatus and/or method, for example further including the boot of Figure 5.

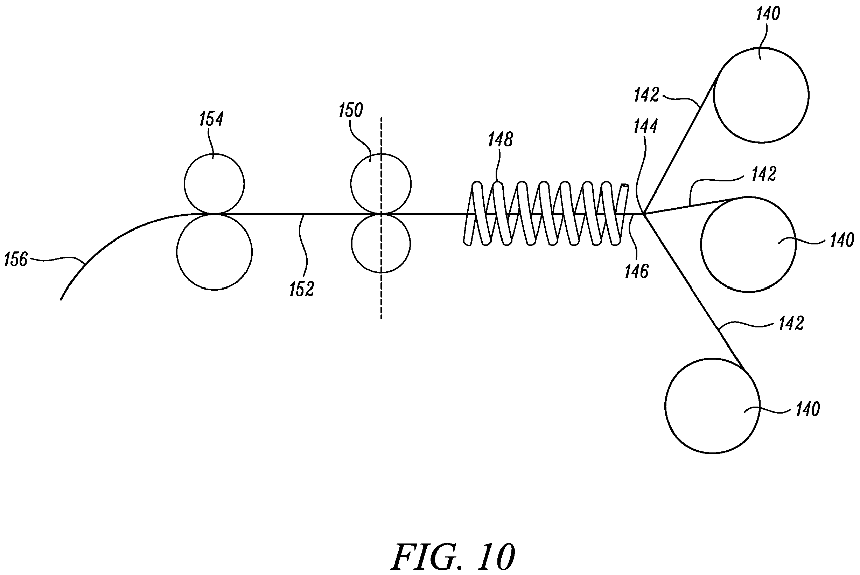

Figure 10 shows an alternative apparatus for manufacturing a cable harness. The apparatus in Figure 10 is suitable for manufacturing continuous lengths (or relatively long lengths) of cable harness. The apparatus in Figure 10 is suitable for manufacturing arced cable harnesses for fitment around the annular casing of a gas turbine engine.

Figure 10 shows three cable looms 140 that each respectively provide a cable strand 142. The three cable strands in the Figure 10 example join at a cable join point 144 which provides a plurality of cables 146. The plurality of cables passes through a pre-heater 148. The plurality of cables passes through a loom roller 150. The loom roller 150 heats and/or applies pressure to portions of each cable to consolidate the plurality of cables 146 into a cable harness 152. The cable harness 152 then passes through an arc former 154. The arc former 154 imparts a curvature to the cable harness 152 to provide a curved cable harness 156.

In the Figure 10 example each cable loom 140 provides a single cable strand 142, however in other examples each cable loom can provide a plurality of cable strands or cable bundle. The cable looms 140 are typically drums that have cable strands wrapped around them and rotate as the cable strand is fed off. In alternative examples another method of continuously providing cable strands may be used. The cable strands 142 are joined together into a plurality of cables 146, or cable bundle, at the cable join point 144. The cable join point 144 arranges the individual cable strands 142 into a position within the plurality of cables 142. The cable join point 144 may be a fixed structure or may include rollers and/or other features. The plurality of cables 146 is then fed through (or passed through or moved through or fed continuously through) the pre-heater 148. The pre-heater 148 heats a portion of the plurality of cables. The pre-heater 148 ensures that the plurality of cables 146 is already heated before entering the loom roller 150. Each cable or cable strand 142 may be of the construction claimed herein, for example that shown in Figure 3a or Figure 7.

The plurality of cables 146 is then fed through (or passed through or moved through or fed continuously through) the loom roller 150. The loom roller 150 is an example of a mould tool. The loom roller 150 applies heat and/or pressure to a portion of the plurality of cables such that the coatings of each cable consolidate into a common harness. The portion is the part of the plurality of cables 146 aligned with and/or located between the loom roller 150, and the portion will continuously and/or progressively move along the plurality of cables 146 as the plurality of cables 146 is fed through the loom roller 150. The loom roller 150 consolidates the plurality of cables 146 into a cable harness 152, for example comprising a common harness with embedded cable inners.

The cable harness 152 is then fed through (or passed through or moved through or fed continuously through) an arc former 154. The arc former 154 imparts a curve to the cable harness 154. The curve is achieved by, in the figure 10 example, two rollers of different diameter that apply different levels of strain to each side of the cable harness 152, due to their differing diameters. In other exampels other methods of imparting an arc to a cable harness may be used. The resulting curved cable harness 156 may have a curve that corresponds to the curvature of the outside of a casing of a gas turbine engine, for example.

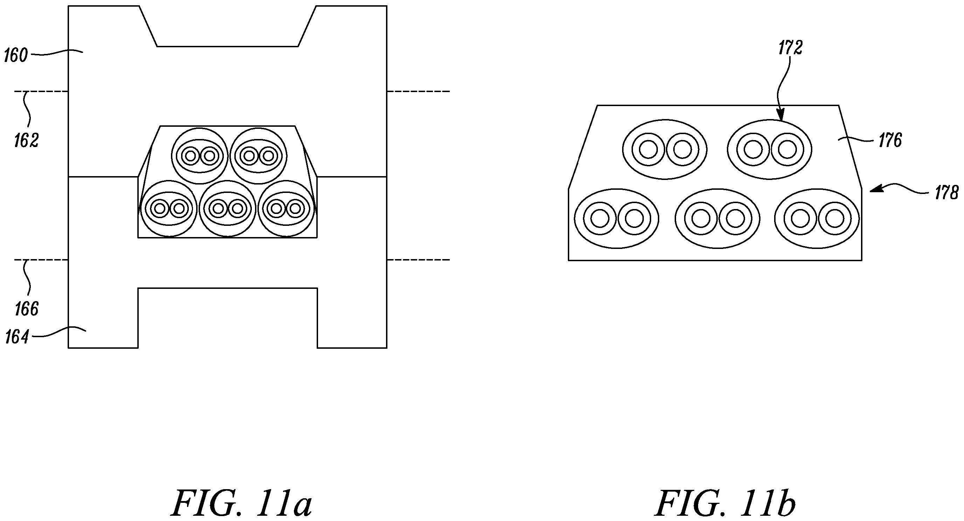

Figure 11 shows the loom roller in more detail. For example, Figure 11 shows the loom roller 150 of Figure 10. Figure 11a shows a sectional view through the loom roller whilst a plurality of wires are being passed through the rollers. Figure 11b shows the resulting cable harness.

Figure 11a shows a loom roller top 160 with a roller top axis 162. Figure 11a shows a loom roller bottom 164 with a roller bottom axis 166. A plurality of cables 170 are between the loom roller top 160 and the loom roller bottom 164. In the Figure 11a example, there are five cables 170, however in other embodiments there may be a greater or less number of cables. Each cable has a cable inner 172 and a coating arrangement 174. The coating arrangement 172 may be according to, for example, the Figure 3a example or the Figure 7 example. In the Figure 11a example, the cable inner 172 has two wires, however in other embodiments the cable inner 172 may have a different construction.

In the Figure 11a example, the plurality of cables 170 are passing through the rollers along an axis perpendicular to the plane of the figure, i.e. in or out of the page. In the Figure 11a example, the loom roller top 160 and loom roller bottom 164 are profiled. For example the loom roller top 160 has a reduction in radius towards its axial centre by including angled changes in outer radius. The loom bottom roller 164 has square changes in outer profile to provide a reduced radius towards its axial centre. The roller top axis 162 and roller bottom axis 166 are separated by a distance such that the profiled loom roller top 160 and profiled loom roller bottom 164 create a mould pocket 171 that corresponds to the outer shape of the plurality of cables. In the Figure 11a example, the pocket 171 is slightly smaller than the outer profile of the plurality of cables 170. Being slightly smaller results in pressure being applied to the plurality of cables 170 as they pass through the rollers. The loom rollers may be heated, for example they may contain heating elements.

Figure 11b shows a cable harness 178. The cable harness 178 comprises a plurality of cable inners 172 and a common harness 176.

In a method of manufacturing a cable harness the plurality of cables 170 are passed through the mould pocket 171 in the loom roller top 160 and loom roller bottom 164. The loom rollers 160, 164 apply heat to the plurality of cables 170 through the heated loom rollers, for example by heating elements in the loom rollers. The loom rollers apply pressure to the plurality of cables 170 due to the fact that the outer profile of the plurality of cables 170 is larger than the profile of the pocket 171. The loom rollers may optionally apply heat and/or pressure to the plurality of cables 170 under a vacuum. The heat and pressure applied by the rollers 160, 164 causes the coating arrangement 174 of each of the cables 170 to consolidate to form a common harness 176. The outer profile of the common harness 174 corresponds to the outer profile of the mould pocket 171. The cable inners 172 are arranged within the common harness 176 in positions that correspond to the arrangement of the plurality of wires 170 before passing through the loom roller 150.

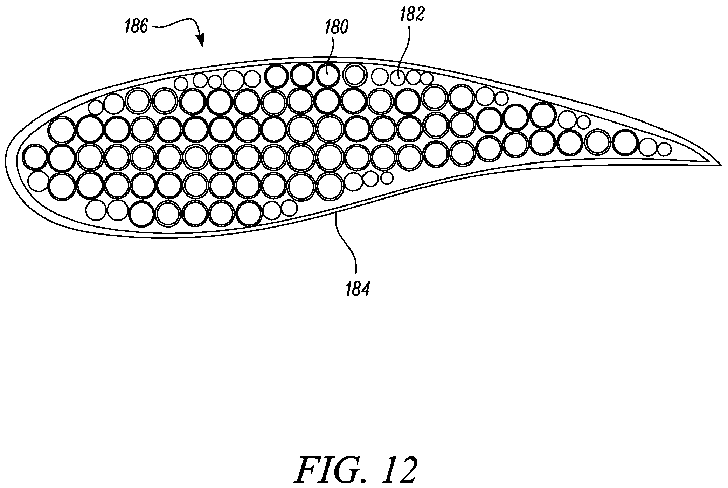

Figure 12 shows an embodiment of the harness 186 with a cross section shaped as an aerofoil. A plurality of cable inners 180 are arranged in an aerfoil shape. Heat treatable filler 182 is positioned around the cable inners 180 in order to ensure a smooth aerodynamic shape to the outer profile of the cross section. A coating 184 is applied around the aerofoil. The coating 184 may be metal, for example to provide a grounding plane or to protect the harness 186. The aerofoil shape may be achieved using a correspondingly shaped mould tool.

Advantageously the aerofoil shaped harness 186 may allow the harness to be placed in positions of air flow in a product, for example with minimal impact on the air flow. For example the harness may be passed through the bypass duct of a gas turbine engine.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A method of manufacturing a cable harness for a gas turbine engine, the method comprising the steps of:
providing a plurality of cables, wherein each cable comprises a cable inner and a coating, and wherein each cable inner comprises at least one conductor;
locating at least a portion of each of the plurality of cables within a mould tool;
heating the portions of each of the plurality of cables such that the coating of each cable consolidates to form a common harness with a solid cross section, wherein the cable inners are arranged within the common harness.

2. The method according to claim 1, wherein the step of heating the plurality of cables further comprises removing air pockets from between the plurality of cables and wherein optionally the step of heating further comprises applying a vacuum to the plurality of cables through the mould tool.

3. The method according to claim 1 or 2 wherein each cable is a twin core cable for a gas turbine engine.

4. The method according to claim 3, wherein each cable comprises heat treatable packer material such that each cable has a circular outer cross section.

5. The method according to any one of the previous claims, wherein the method further comprises the step of locating heat treatable filler within the mould tool.

6. The method according to any one of the previous claim, wherein the cable coatings and/or heat treatable packer material and/or heat treatable filler are formed of a thermoset or thermoplastic material.

7. The method according to any previous claim, wherein an outer profile of the harness is aerofoil shaped.

8. The method according to any one of the previous claims, wherein the step of providing a plurality of cables comprises providing a safety critical cable, and the step of locating the plurality of cables within a mould tool comprises locating the safety critical cable towards the centre of the mould tool.

9. The method according to any one of the previous claim, wherein the method further comprises the step of locating clipping and/or mounting and/or connecting and/or branch portion features within the mould tool.

10. The method according to any one of the previous claims, wherein the method further comprises the step of locating a PCB within the mould tool.

11. The method according to any one of the previous claims wherein the common harness is rigid for providing structural support to a component.

12. The method according to any one of the previous claims, wherein the method further comprises the step of securing the sintered harness in a composite material structure.

13. The method according to any one of the previous claims, further comprising the step of forming the cable harness into an arc, wherein optionally arc roller formers are provided that form the cable harness into an arc.

14. The method according to any previous claim, wherein the mould tool comprises a loom roller, and the step of heating the portions comprises feeding the plurality of cables through the loom roller to apply heat and pressure to the plurality of cables, and optionally feeding the plurality of cables through a pre-heater before feeding the plurality of cables through the loom roller.

15. A method of assembling a gas turbine engine, the method comprising the steps of manufacturing a cable harness according to any one of the previous claims; and attaching the sintered harness to the gas turbine engine.
